# EUROPÄISCHE PATENTANMELDUNG

(11) **EP 0 751 096 A2**
(43) Veröffentlichungstag der Anmeldung: **02.01.1997**
(21) Anmeldenummer: 96107326.9
(22) Anmeldetag: 07.05.1996
(51) Int. Cl.: C02F 1/46

(54) **Elektrophysikalisches Gerät**

(30) Priorität: 09.05.1995 DE 19516884
(71) Anmelder: Wittich, Robert, 67122 Altrip (DE)
(72) Erfinder: Wittich, Robert, 67122 Altrip (DE)
(74) Vertreter: Lenzing, Andreas

(57) **Zusammenfassung**

Die Erfindung betrifft ein elektrophysikalisches Gerät zur Auslösung der Kristallkeimbildung in wäßrigen Lösungen aufgrund eines an der Lösung angelegten Gleichspannungsfeldes, wobei der Gleichspannung eine Wechselspannung überlagert ist.

## Beschreibung

Die vorliegende Erfindung betrifft ein elektrophysikalisches Gerät mit den Merkmalen des Oberbegriffs des Anspruchs 1.

Aus der EP 02 82 476 B1 und aus der US-PS 1 274 902 sind elektrostatische Wasserbehandlungsgeräte bekannt, die die Behandlung von Leitungswasser erlauben und eine Entfernung oder eine physikalische Veränderung der gelösten Bestandteile bewirken sollen.

Die bekannten Vorrichtungen führen das zu behandelnde Leitungswasser durch ein statisches elektrisches Feld und lösen dadurch in dem Wasser eine Kristallkeimbildung aus. Die erzwungene Kristallkeimbildung wird zu einer großen Anzahl relativ kleiner Kristallkeime, die in dem Leitungswasser als weniger schädlich empfunden werden als die ursprünglich gelösten Inhaltsstoffe. Insbesondere bilden sich bei derart vorbehandeltem Wasser weniger Ablagerungen in Rohren und an Heizelementen.

Die Wirksamkeit der bekannten Wasserbehandlungsgeräte wird jedoch in der Praxis häufig als nicht ausreichend empfunden, jedenfalls sind die bekannten Geräte nicht an die Vielzahl der auftretenden Einbausituationen und die verschiedenartigen Leitungswässer anpaßbar.

Es ist daher Aufgabe der Erfindung, ein elektrophysikalisches Wasserbehandlungsgerät zu schaffen, das von der Wirkung her die bekannten Geräte übertrifft.

Diese Aufgabe wird bei einem Gerät mit den Merkmalen des Oberbegriffs des Anspruchs 1 durch die Merkmale des kennzeichnenden Teils des Anspruchs 1 gelöst.

Weil der Gleichspannung eine Wechselspannung überlagert ist, kann das elektrische Feld, mit dem das Leitungswasser beaufschlagt wird, an die gegebenen Verhältnisse angepaßt werden. Die Kristallkeimbildung wird durch Feldinhomogenitäten sowohl zeitlicher als auch räumlicher Art gefördert. Während bei einem gegebenen Gerät die räumlichen Inhomogenitäten nicht einstellbar sind, kann durch das überlagerte Wechselspannungsfeld eine zeitliche Inhomogenität geschaffen und individuell einstellbar gemacht werden.

Wenn alle Elektroden gegenüber der Lösung beschichtet sind, beispielsweise mit einer Schicht aus Kunststoff, Glas, Porzellan, Lacken oder Metallen, kann die Abscheidung von Ablagerungen auf den Elektroden verhindert oder reduziert werden. Die im Betrieb mit positiver Spannung beaufschlagte Plus-Elektrode kann vorteilhaft von einem Rohr gebildet sein, das von der einströmenden Flüssigkeit durchflossen ist. Ein relativ langer Weg durch das elektrische Feld ergibt sich, wenn die Flüssigkeit das Rohr außen in entgegengesetzter Richtung umfließt. Die Minus- oder Masseelektrode kann gegenüber dem Rohr koaxial angeordnet sein, wodurch sich weiter eine vorteilhafte Geometrie des Feldes einstellt. Lokale Feldinhomogenitäten können sich insbesondere gut einstellen, wenn wenigstens eine Elektrode wenigstens eine Wölbung aufweist, wobei die Feldinhomogenität besonders groß wird, wenn die Wölbung in Richtung der Feldlinien gestaltet ist.

Ein für die Kristallkeimbildung vorteilhaft langer Weg ergibt sich, wenn das Gerät für die Flüssigkeit durch mindestens eine Elektrode einen Weg bildet, der labyrinthförmig, schneckenförmig, spiralförmig oder schraubenförmig ist. In einem solchen Fall ist die Verweildauer der Flüssigkeit in dem elektrischen Feld besonders groß, so daß für die Kristallkeimbildung relativ viel Zeit zur Verfügung steht. Zusätzlich zu der Gleichspannung können durch zwei zusätzliche Elektroden Stromimpulse, insbesondere Wechselstromimpulse angelegt werden, so daß weitergehende Feldinhomogenitäten räumlicher und zeitlicher Art geschaffen werden können.

Ein angestrebtes Kalk-Kohlensäure-Gleichgewicht wird erreicht, wenn durch die Elektrodenanordnung und die angelegte Spannung wenigstens lokal eine Mikroelektrolyse hervorgerufen wird. Dabei kann neben dem entstehenden Wasserstoff und Sauerstoff auch Kohlensäure austreten, so daß das erwähnte Kalk-Kohlensäure-Gleichgewicht geschaffen wird. Die entstehenden Gase können in dem stromabwärts liegenden Bereich wieder in Lösung gehen, so daß sie zwar als Stoffe in dem Wasser erhalten bleiben, aber nicht mehr in Form von ionischen Inhaltsstoffen für eine eventuelle Kristallbildung zur Verfügung stehen.

Ein Ausführungsbeispiel der vorliegenden Erfindung wird im folgenden anhand der Zeichnungen beschrieben.

Es zeigen:
- Figur 1:: Eine Elektrodenanordnung für ein erfindungsgemäßes Gerät in einem Querschnitt von der Seite;
- Figur 2:: ein elektrophysikalisches Wasserbehandlungsgerät mit einer Elektrodenanordnung gemäß Figur 1 in einem Querschnitt von der Seite;
- Figur 3:: eine andere Elektrodenanordnung mit spiralförmiger Wasserführung in einem Querschnitt von der Seite; sowie
- Figur 4:: die Elektrodenanordnung gemäß Figur 3 in einem Querschnitt von oben.

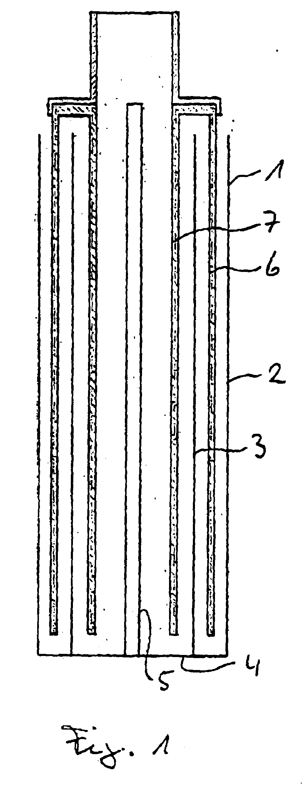

In der Figur 1 ist eine Elektrodenanordnung für ein Wasserbehandlungsgerät in einem Querschnitt von der Seite dargestellt. Die Elektrodenanordnung umfaßt eine im Betrieb auf Erdpotential liegende äußere Elektrode 1, die bei dem dargestellten Ausführungsbeispiel zwei konzentrische Rohre 2 und 3 umfaßt, die an einem Ende auf einer gemeinsamen, kreisscheibenförmigen Grundplatte 4 angeordnet sind. In der Mitte der Grundplatte 4 und konzentrisch zu den Elektrodenrohren 2 und 3 ist eine stabförmige Mittenelektrode 5 angebracht, die über die Grundplatte 4 mit den Elektrodenrohren 2 und 3 elektrisch leitend in Verbindung steht. Die Mittenelektrode 5 ist ebenso wie die Grundplatte 4 und die Elektrodenrohre 2 und 3 elektrisch nicht isoliert, jedoch mit einer Oberflächenbeschichtung versehen, die im Betrieb, d. h. im ständigen Kontakt mit Leitungswasser, die Verschmutzung der Oberflächen verhindert.

Zwei ebenfalls zu der Mittenelektrode konzentrische, rohrförmige Gegenelektroden 6 und 7 ragen in den freien, zylindrischen Raum zwischen dem Elektrodenrohr 2 und dem Elektrodenrohr 3 bzw. zwischen dem Elektrodenrohr 3 und der Mittenelektrode 5. Dabei sitzt die Gegenelektrode 6 mittig zwischen den Elektrodenrohren 2 und 3, während die Gegenelektrode 7 näher an dem Elektrodenrohr 3 als an der Mittenelektrode 5 angeordnet ist.

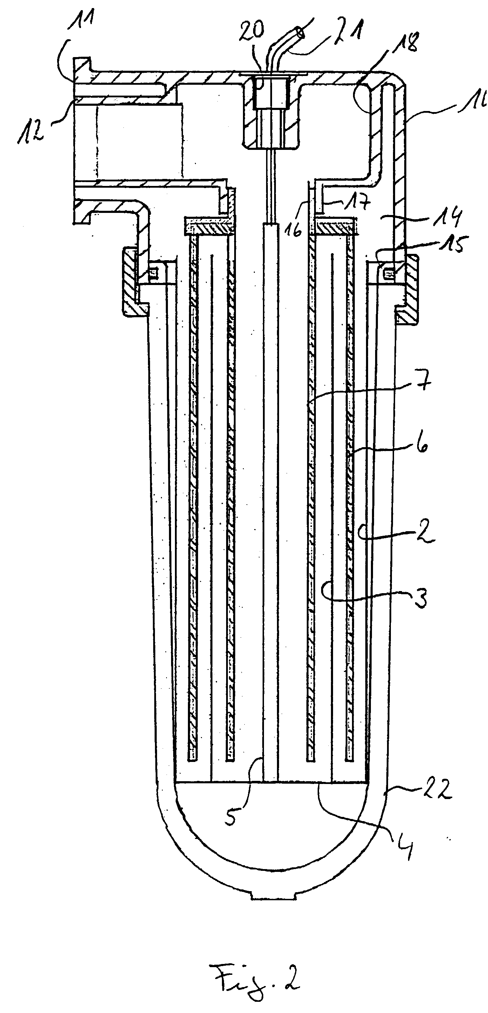

Die Figur 2 zeigt die Elektrodenanordnung gemäß Figur 1, eingebaut in einem anschlußfertigen Wasserbehandlungsgerät.

Das Wasserbehandlungsgerät umfaßt einen Anschlußkopf 10, der an einer Seite zwei horizontale und koaxiale Rohranschlüsse 11 und 12 besitzt. An seiner Unterseite ist der Anschlußkopf 10 über einen Querschnitt offen, der die Aufnahme der Elektrodenanordnung gemäß Figur 1 erlaubt. Dabei geht das Rohr 11 über einen Ringspalt in eine äußere Einströmkammer 14 über, in die von unten her und nach außen abdichtend das äußere Elektrodenrohr 2 eingeführt werden kann. Das äußere Elektrodenrohr 2 sitzt dabei bündig an einem von dem Gehäuse des Anschlußkopfes 10 nach innen verlaufenden Ringbund 15. Die Gegenelektroden 6, 7 sind über einen gemeinsamen Schraubstutzen 16 mit einem zu der Einströmkammer 14 konzentrisch angeordneten, mit dem Anschlußkopf 10 konzentrischen Gewindeansatz 17 verbunden.

Zwischen der Gewindeverbindung 16, 17 und dem Rohr 12 ist ein Ausströmraum 18 vorgesehen, in dem auch eine gegenüber dem Anschlußkopf 10 isolierte Elektrodenanschlußvorrichtung 20 eingesetzt ist. Die Durchführung 20 erlaubt den elektrischen Anschluß der Mittenelektrode 5 an ein Anschlußkabel 21 für die Spannungsversorgung der Vorrichtung.

Nach außen hin abgeschlossen wird die gesamte Elektrodenanordnung durch einen haubenförmigen Verschluß 22, der von unten her über die Elektrodenanordnung greift und auf den Ringbund 15 des Anschlußkopfes 10 aufsetzbar ist. Eine Überwurfmutter 23 sichert den haubenförmigen Verschluß 22 an dem Anschlußkopf 10 in der Weise, daß Wasserdichtigkeit und Druckfestigkeit bezüglich des im öffentlichen Wassernetz herrschenden Leitungsdrucks gewährleistet ist.

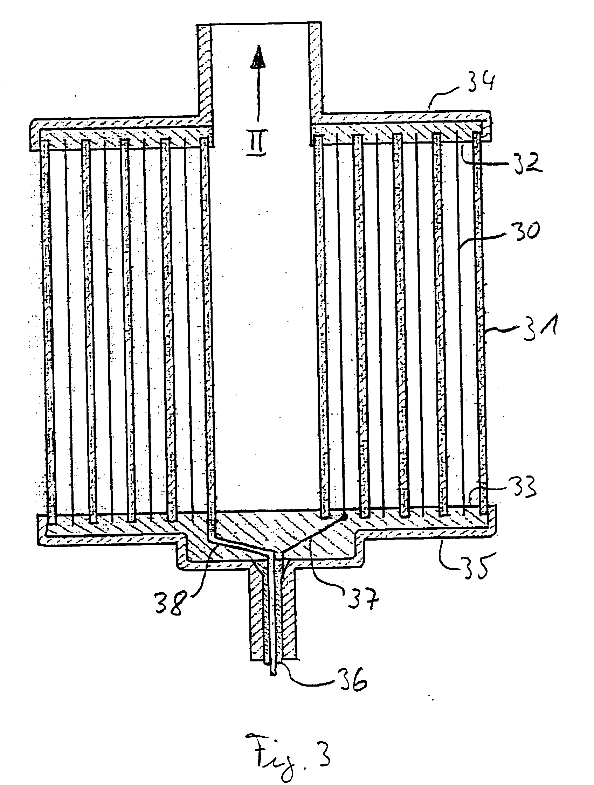

In der Figur 3 ist eine andere Elektrodenanordnung dargestellt, die bei größerem, zur Verfügung stehendem Einbauraum zum Einsatz kommen kann. Diese Elektrodenanordnung umfaßt eine gegenüber dem zu behandelnden Wasser nicht isolierte Elektrode 30 sowie eine im gleichmäßigen Abstand zu der Elektrode 30 verlaufende, isolierte Elektrode 31, die beide aus einem spiralförmig aufgerollten Bandmaterial gefertigt sind. Isolierstücke 32 und 33 halten die Elektroden an ihrem Platz und legen die Elektroden räumlich fest. Ein oberer Flanschteil 34 und ein untere Flanschteil 35 verleihen zusätzliche mechanische Festigkeit und enthalten die für den Einsatz in einem Wasserbehandlungsgerät erforderlichen Anschlußmöglichkeiten.

Eine Elektrodendurchführung 36 ermöglicht die Durchführung von elektrischen Anschlüssen 37 und 38 zu den Elektroden 30 bzw. 31.

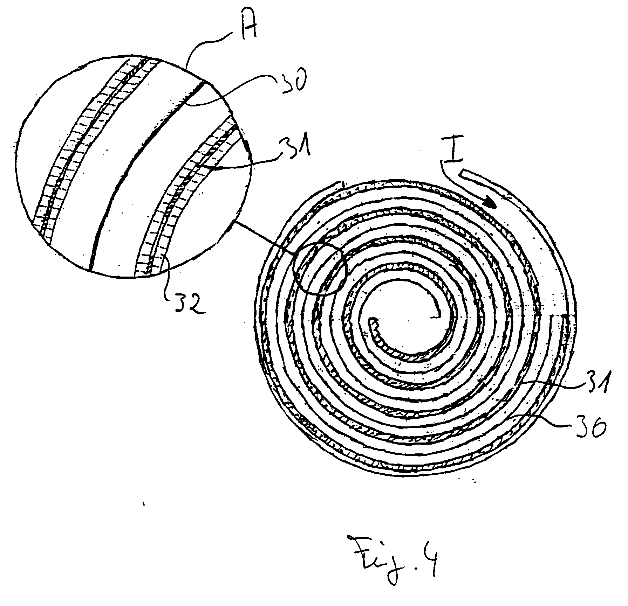

Die geometrische Anordnung der Elektroden 30 und 31 ist in der Figur 4 in einer Draufsicht auf einen Querschnitt durch die in Figur 3 dargestellte Anordnung veranschaulicht. Die Elektroden 30 und 31 sind jeweils in Form einer Spirale gestaltet, wobei der Durchmesser von einem Spiralgang zum nächsten um den gleichen Betrag zunimmt. Die beiden spiralförmigen Elektroden 30 und 31 sind konzentrisch zueinander angeordnet, aber um 180° gegeneinander verdreht, so daß die eine Elektrode jeweils mittig zwischen zwei Gängen der anderen Elektrode liegt. Der vergrößerte Ausschnitt A in Figur 4 zeigt den näheren Aufbau der Elektroden 30 und 31. Die Elektrode 30 ist dabei aus einem metallischen, geschlossenen und glatten Wandmaterial gefertigt, das mit einer haftungsmindernden Beschichtung versehen ist. Die Beschichtung läßt die Oberfläche der Elektrode auch bei Langzeitkontakt mit Leitungswasser nicht verschmutzen. Die Gegenelektrode 31 ist im Gegensatz dazu aus einer netzartigen oder mit Löchern versehenen Folie oder aus einem Lochblech aufgebaut und beidseits mit einer elektrisch isolierenden Beschichtung 32 ausgestattet, so daß die Elektrode galvanisch nicht mit dem zu behandelnden Wasser in Verbindung kommt.

Bei der Verwendung der insoweit dargestellten Elektrodenanordnung in elektrophysikalischen Wasserbehandlungsgeräten erfolgt die Behandlung des Leitungswassers etwa in folgender Weise.

Bei dem Gerät gemäß Figur 2 strömt das Wasser durch den äußeren, ringförmigen Einlaßspalt zwischen den Rohren 11 und 12 in die Einströmkammer 14 ein. Von da aus strömt das Wasser in der Figur 2 zunächst nach unten zwischen den Elektroden 2 und 6, wird dann im Bereich der Bodenplatte 4 umgelenkt und strömt zwischen den Elektroden 6 und 3 wieder nach oben, danach zwischen den Elektroden 3 und 7 wieder nach unten und schließlich zwischen den Elektroden 7 und 5 wieder nach oben zu dem Ausströmraum 18 und von da aus durch den inneren koaxialen Anschluß des Rohres 12 nach außen zu den Wasserverbrauchsstellen des zu versorgenden Haushalts. Der Abstand der Elektroden voneinander wächst bei der Elektrodenanordnung gemäß Figur 1 und Figur 2 von innen nach außen, damit der freie Querschnitt zwischen den Elektroden konstant und somit die Strömungsgeschwindigkeit konstant bleibt.

Bei der Anordnung gemäß Figur 3 und Figur 4 strömt das Wasser in den äußeren, offenen Bereich zwischen den Elektroden 30 und 31 ein (in der Figur 4 mit dem Pfeil I veranschaulicht), strömt dann spiralförmig gleichmäßig nach innen und steigt im Innenbereich koaxial zu der gesamten Anordnung auf, d. h. in der Figur 3 entsprechend der mit dem Pfeil II veranschaulichten Ausströmrichtung. Das für die Elektrodenanordnung gemäß Figur 3 und Figur 4 erforderliche Gehäuse kann entsprechend dem in Figur 2 dargestellten Gehäuse ausgestaltet sein, wobei lediglich der Querschnitt größer gewählt werden muß.

Zur Wasserbehandlung befinden sich die unbeschichteten Elektroden 2, 3 bzw. 30 entweder auf dem Potential 0 (Erdpotential) oder auf einem negativen Potential, während die Gegenelektroden 6, 7 bzw. 31 gegenüber der vorgenannten Elektrode auf positivem Potential gehalten sind. Die zur Anwendung kommenden Spannungsbereiche sind von dem zu behandelnden Wasser abhängig, insbesondere von der Art und der Konzentration der gelösten Kationen und Anionen. Es sind derzeit jedoch Potentialdifferenzen zwischen den beiden Elektroden von etwa 24 V angestrebt, wobei dieser Potentialdifferenz eine Wechselspannung mit einer Amplitude zwischen 1 V und 20 V überlagert sein kann.

Die Elektrodenanordnung gemäß Figur 1 und Figur 2 ermöglicht eine Wasserführung zwischen den Elektroden entlang einem relativ kurzen Weg, wobei aber im Bereich der Elektrodenenden inhomogene elektrische Felder und turbulente Verwirbelungen der Wasserströmung auftreten, die den Wasserbehandlungseffekt positiv beeinflussen. Bei der Ausführungsform gemäß Figur 3 und Figur 4 strömt das Wasser ohne turbulente Umlenkungen relativ gleichmäßig zwischen den Elektroden entlang, benötigt deshalb für eine adäquate Behandlung des Wassers auch eine längere Zeit entsprechend einem längeren Weg zwischen den Elektroden. Diese Ausführungsform ist geeignet für Anwendungen, bei denen eine Geräuschentwicklung durch strömendes Wasser weitgehend vermieden werden soll.

Der Behandlungseffekt der insoweit beschriebenen elektrophysikalischen Wasserbehandlungsgeräte beruht nach derzeitigen Erkenntnissen darauf, daß aus den im unbehandelten Wasser gelösten Anionen und Kationen Kristallkeime gebildet werden, die dem Wasser die in Lösung befindlichen ionischen Bestandteile entziehen. Damit sinkt der Anteil der ionischen gelösten Bestandteile, und das Wasser hat nominell eine geringere Härte. Idealerweise wird durch das Gerät das sogenannte Kalk-Kohlensäure-Gleichgewicht eingestellt. Es kann auch durch geeignete Wahl der eingestellten Parameter erreicht werden, daß aufgrund Extrem inhomogener elektrischer Felder, beispielsweise im Bereich der Elektrodenenden, in Figur 1 und Figur 2 lokal eine sogenannte Mikroelektrolyse stattfindet, bei der Wassermoleküle in geringem Umfang in Wasserstoff- und Sauerstoffgas umgewandelt werden, das unmittelbar in Lösung geht, ohne zum Wassermolekül zu rekombinieren. Auch dieser Effekt kann zur Einstellung des optimalen Kalk-Kohlensäure-Gleichgewichts genutzt werden.

Ein weiterer Vorteil der erfindungsgemäßen Wasserbehandlungseinrichtung ist die Fähigkeit des insoweit behandelten Wassers, bereits in den Rohren der nachgeschalteten Hauswasserleitung befindliche Ablagerungen wieder in Lösung gehen zu lassen. Dieser Effekt beruht auf dem Umstand, daß die Konzentration an ionischen Bestandteilen im Wasser gesenkt wird und somit die Lösungsfähigkeit des Wassers bezüglich der vorhandenen Ablagerungen ansteigt.

Das insoweit beschriebene elektrophysikalische Wasserbehandlungsgerät arbeitet im Gegensatz zu den bisher bekannten Wasserbehandlungsgeräten mit elektrischen Kleinspannungen im Bereich von einigen 10 V bei einer überlagerten Wechselspannung mit einer Frequenz von etwa 1 kHz bis 10 kHz, so daß keine aufwendigen elektronischen Schaltungen oder besondere elektrische Schutzmaßnahmen erforderlich sind.

## Patentansprüche

1. Elektrophysikalisches Gerät zur Auslösung der Kristallkeimbildung in wäßrigen Lösungen aufgrund eines an der Lösung angelegten Gleichspannungsfeldes, **dadurch gekennzeichnet,** daß der Gleichspannung eine Wechselspannung überlagert ist.

2. Gerät nach Anspruch 1, **dadurch gekennzeichnet,** daß alle Elektroden gegenüber der Lösung beschichtet sind.

3. Gerät nach Anspruch 2, **dadurch gekennzeichnet,** daß als Schicht Kunststoff, Glas, Porzellan, Lacke, Metalle verwendet werden.

4. Gerät nach einem der vorherigen Ansprüche, **dadurch gekennzeichnet,** daß die Plus-Elektrode von einem Rohr gebildet ist, das von der eingehenden Flüssigkeit durchflossen ist.

5. Gerät nach Anspruch 4, **dadurch gekennzeichnet,** daß die hindurchgeflossene Flüssigkeit danach das Rohr außen in entgegengesetzter Richtung umfließt.

6. Gerät nach Anspruch 4 oder 5, **dadurch gekennzeichnet,** daß im Rohr eine Minus-Elektrode, insbesondere koaxial angeordnet ist.

7. Gerät nach einem der vorherigen Ansprüche, **dadurch gekennzeichnet,** daß mindestens eine Elektrode mindestens eine Wölbung aufweist zum Erzeugen von Feldinhomogenitäten.

8. Gerät nach einem der vorherigen Ansprüche, **dadurch gekennzeichnet,** daß das Gerät für die Flüssigkeit durch mindestens eine Elektrode einen Weg bildet, der labyrinthförmig, schneckenförmig, spiralförmig oder schraubenförmig (wendelförmig) ist.

9. Gerät nach einem der vorherigen Ansprüche, **dadurch gekennzeichnet,** daß zusätzlich zur Gleichspannung durch zwei zusätzliche Elektroden Stromimpulse, insbesondere Wechselstromimpulse angelegt sind.

10. Gerät nach einem der vorherigen Ansprüche, **dadurch gekennzeichnet,** daß durch die Elektrodenanordnung und die angelegte Spannung wenigstens lokal eine Mikroelektrolyse hervorgerufen wird.
